Europäisches Patentamt

European Patent Office

Office européen des brevets

(11) Publication number: **0 045 562**
A2

# (12) EUROPEAN PATENT APPLICATION

(21) Application number: **81302880.0**

(22) Date of filing: **25.06.81**

(51) Int. Cl.³: **B 01 D 37/02**
**B 01 F 17/00, C 09 D 7/02**

(30) Priority: **30.06.80 US 164457**
**18.12.80 US 217877**

(43) Date of publication of application:
**10.02.82 Bulletin 82/6**

(84) Designated Contracting States:
**AT BE CH DE FR GB IT LI LU NL SE**

(71) Applicant: **CALGON CORPORATION**
**Route 60-Campbell's Run Road**
**Robinson Township Pennsylvania 15205(US)**

(72) Inventor: **Sharpe, Andrew J.**
**119 Sheffield Lane**
**McMurray Pennsylvania 15317(US)**

(72) Inventor: **Falcione, Ronald J.**
**211 Hutchinson Avenue**
**Canonsburg Pennsylvania 15317(US)**

(72) Inventor: **Boothe, Jerry E.**
**221 Disney Drive**
**Coraopolis Pennsylvania 15108(US)**

(74) Representative: **Crampton, Keith John Allen et al,**
**D. Young & Co. 10 Staple Inn**
**London WC1V 7RD(GB)**

(54) **Filter aid and pigment dispersant.**

(57) Water-soluble cationic polymers of molecular weight 10,000 to 2,500,000 are used as filter aids and pigment dispersants for dewatering pigments such as clay, titanium dioxide and calcium carbonate and redispersing the pigment for processing by the user. They are added to the slurry before dewatering, in an amount of 0.05 to 3.0 kg per dry tonne of pigment.

EP 0 045 562 A2

1

# FILTER AID AND PIGMENT DISPERSANT

This invention is concerned with filter aids and dispersants for processing pigments such as clay, titanium dioxide and calcium carbonate.

More particularly, this invention is concerned with the use of filter aids to improve the dewatering rate and decrease the filter cake moisture of pigment slurries such as clay, titanium dioxide and calcium carbonate slurries, and with the redispersion of previously treated pigments so that they may readily be shipped or used as high solids aqueous slurries.

Clay, titanium dioxide and calcium carbonate are processed as aqueous slurries, which are dewatered by vacuum filtration, centrifugation or other suitable techniques to increase the solids content prior to shipment. Previous attempts to increase the dewatering rate have resulted in improved dewatering rates, but have caused higher filter cake moisture contents which have resulted in overloading the dryers used in subsequent drying steps. In addition, when these pigments are ultimately used in paper manufacturing operations, they are applied as aqueous slurries. Heretofore, attempts to use cationic surfactants as pigment dispersants have proved unsuccessful.

2

The problem that this invention aims at solving is that of providing a filter aid that increases the dewatering rate of pigments such as clay, titanium dioxide and calcium carbonate slurries while reducing or having no significant detrimental effect on the filter cake moisture, that decreases the energy required to dry aqueous slurries of pigments such as clay, titanium dioxide and calcium carbonate, that improves the efficiency and economics of drying aqueous slurries of pigments such as clay, titanium dioxide and calcium carbonate and that reduces the viscosity of pigment slurries, thereby permitting the pumping and use of pigment slurries of high solids content.

In accordance with the present invention, the dewatering rate of an aqueous slurry of a pigment such as clay, titanium dioxide or calcium carbonate to yield a filter cake is improved by adding to the slurry, prior to the dewatering operation, from 0.05 to 3.0 kg of active polymer per dry tonne of pigment of a water-soluble cationic polymer having a molecular weight in the range 10,000 to 2,500,000, preferably 20,000 to 1,000,000 and particularly 20,000 to 500,000, as a filter aid. Representative cationic polymers include copolymers of diallyldimethylammonium chloride, homopolymers of diallyldimethylammonium chloride, condensation polyamines, methacrylamido-3-propyl trimethyl ammonium chloride, aminomethylated polyacrylamide, methacryloyloxyethyltrimethyl-ammonium methosulfate, methacryloyloxyethyltrimethylammonium chloride and copolymers with acrylamide. The preferred polymers, however, are homopolymers of diallyldimethylammonium chloride, and copolymers of diallyldimethylammonium chloride and acrylamide.

3

Slurries of pigments such as clay, titanium dioxide and calcium carbonate proved in accordance with the present invention have improved characteristics of retention and drainage when added to paper furnish.

The polymeric filter aid of this invention will preferably be fed to the slurry prior to the filtration operation at a dosage of 0.15 to 1.75 kg of active polymer per dry tonne of pigment. When used as a dispersant to redisperse the pigment as an aqueous slurry, the polymer of this invention will be added to the aqueous slurry at a dosage of 2 to 20 kg of active polymer per dry tonne of pigment, preferably 2.5 to 12.5 kg per tonne. The addition of this slurry to a paper furnish allows for improved retention of the pigment in the furnish and for more rapid drainage of the slurry.

The present invention may be illustrated by the following representative examples.

4

## EXAMPLE 1

High-molecular-weight anionic, nonionic and cationic polymers are compared with a cationic polymer of the present invention for their ability to improve the rate of water release from a clay slurry. A 200 ml clay slurry having a solids concentration of 22 percent by weight was mixed for 2 minutes after polymer addition and poured into a Buchner Funnel containing Whatman No. 4 filter paper. Polymer concentration is expressed in terms of Kg. of polymer per dry tonne of clay. A vacuum of 25 inches (84.66 kPa) was applied and the time to reach specific volumes of water drawn from the slurry is used as a measure of the effectiveness of the polymer. The shorter the time, the more effective the polymer is in this application. The results of these comparisons are set forth in Table I.

TABLE 1

| Test Polymer | Feed Rate Kg./Tonne Active | ml of 0.1 Percent Test Polymer Solution | Total Volume (ml) | Time to Collect (Minutes) | | | | 60 Percent Cake Time (Minutes) | Filtrate In 20 Minutes (ml) |
|---|---|---|---|---|---|---|---|---|---|
| | | | | 25 ml | 50 ml | 75 ml | 100 ml | | |
| No Aid | --- | -- | 200 | 0.77 | 2.88 | 6.43 | 11.40 | 17.88 | 133 |
| LMW Cationic | 0.25 | 11 | 211 | 0.52 | 2.22 | 5.03 | 8.97 | 17.10 | 145 |
| | 0.5 | 22 | 222 | 0.48 | 1.88 | 4.20 | 7.45 | 17.42 | 154 |
| | 1.0 | 44 | 244 | 0.38 | 1.45 | 3.17 | 5.53 | 17.80 | 175 |
| | 1.5 | 66 | 266 | 0.35 | 1.20 | 2.75 | 4.90 | 18.78 | 197 |
| | 2.0 | 88 | 288 | 0.37 | 1.23 | 2.80 | 4.98 | 23.33 | 206 |
| HMW Anionic | 0.5 | 22 | 222 | 0.60 | 2.35 | 5.28 | 9.32 | 21.10 | 146 |
| | 1.0 | 44 | 244 | 0.40 | 1.47 | 3.42 | 6.08 | 18.43 | 172 |
| | 1.5 | 66 | 266 | 0.32 | 1.12 | 2.53 | 4.42 | Cake Break | --- |
| HMW Nonionic | 0.5 | 22 | 222 | 0.58 | 2.32 | 5.18 | 9.08 | 19.87 | 150 |
| | 1.0 | 44 | 244 | 0.37 | 1.42 | 3.23 | 5.95 | 18.15 | 173 |
| | 1.5 | 66 | 266 | 0.05 | 0.20 | 0.45 | 0.78 | Cake Break | --- |
| HMW Cationic | 0.5 | 22 | 222 | 0.70 | 2.70 | 5.90 | 10.28 | 23.15 | 139 |
| | 1.0 | 44 | 244 | 0.57 | 2.28 | 4.93 | 8.78 | 26.18 | 151 |
| | 1.5 | 66 | 266 | 0.40 | 1.50 | 3.40 | 6.15 | 24.53 | 173 |
| | 2.0 | 88 | 288 | 0.17 | 0.65 | 1.38 | 2.53 | Cake Break | --- |

LMW Cationic is poly(diallyldimethylammonium chloride with a molecular weight of about 100,000.

## TABLE I (Continued)

HMW Anionic is a copolymer of acrylamide and acrylic acid with a molecular weight of about 8,000,000 or more.

HMW Nonionic is polyacrylamide with a molecular weight of about 8,000,000 or more.

HMW Cationic is a copolymer of acrylamide and methacryloyloxyethyltrimethyl-ammonium methosulfate with a molecular weight of about 8,000,000 or more.

C-1256IA

7

EXAMPLE 2

Homopolymers of diallyldimethylammonium chloride of varying molecular weight, as measured by intrinsic viscosity, are compared for their ability to improve the rate of water release from a clay slurry. A 200 ml clay slurry having a solids concentration of 22 percent by weight was mixed for 10 minutes after polymer addition and poured into a Buchner Funnel containing Whatman No. 4 filter paper. Polymer concentration is expressed in terms of Kg. of polymer per dry tonne of clay. A vacuum of 15 inches (50.8 kPa) was applied and the time to reach specific volumes of water drawn from the slurry is used as a measure of the effectiveness of the polymer. The shorter the time, the more effective the polymer is in this application. The results of these tests are set forth in Table II.

TABLE II

| Sample | Feed Rate (Active Kg /Dry Tonne) | Time In Minutes to Collect | | | | 60 Percent Cake Time (Minutes) | Filtrate Obtained In 20 Minutes |
| | | 25 ml | 50 ml | 75 ml | 100 ml | | |
| Blank | 0 | 1.00 | 3.23 | 6.43 | 10.92 | 16.22 | 140 |
| Polymer A | 0.5 | 0.80 | 2.48 | 5.32 | 9.08 | 13.75 | 142 |
| | 1.0 | 0.67 | 2.27 | 4.63 | 7.80 | 11.97 | 145 |
| | 1.5 | 0.52 | 1.87 | 3.92 | 6.67 | 10.27 | 147 |
| | 2.0 | 0.43 | 1.57 | 3.30 | 5.63 | 8.70 | 151 |
| | 2.5 | 0.38 | 1.43 | 3.02 | 5.15 | 7.92 | 150 |
| | 3.0 | 0.37 | 1.30 | 2.73 | 4.55 | 7.35 | ---- |
| Blank | 0 | 0.97 | 3.15 | 6.33 | 10.80 | 16.17 | 141 |
| Polymer B | 0.5 | 0.72 | 2.40 | 5.10 | 8.90 | 13.60 | 142 |
| | 1.0 | 0.60 | 2.13 | 4.42 | 7.70 | 11.85 | 145 |
| | 1.5 | 0.50 | 1.30 | 3.82 | 6.63 | 10.20 | 148 |
| | 2.0 | 0.50 | 1.83 | 4.05 | 7.40 | 10.85 | 137 |
| Blank | 0 | 1.00 | 3.35 | 6.47 | 11.02 | 16.25 | 138 |
| Polymer C | 0.5 | 0.75 | 2.73 | 5.65 | 9.63 | 14.78 | 142 |
| | 1.0 | 0.63 | 2.22 | 4.77 | 8.48 | 13.62 | 144 |
| | 1.5 | 0.53 | 1.97 | 4.52 | 7.70 | 12.80 | 145 |
| | 2.0 | 0.50 | 1.88 | 4.33 | 7.45 | 12.58 | 146 |
| | 2.5 | 0.52 | 2.02 | 4.70 | 8.22 | 13.32 | 141 |

TABLE I I (Continued)

Polymer A is a homopolymer of diallyldimethylammonium chloride having an intrinsic viscosity of 1.6 when measured in a Cannon-Ubbelohde Semi-Micro Viscometer using a sodium chloride/sodium thiosulfate solvent system.

Polymer B is a homopolymer of diallyldimethylammonium chloride having an intrinsic viscosity of 0.6 when measured in a Cannon-Ubbelohde Semi-Micro Viscometer using a sodium chloride/sodium thiosulfate solvent system.

Polymer C is a homopolymer of diallyldimethylammonium chloride having an intrinsic viscosity of 0.3 when measured in a Cannon-Ubbelohde Semi-Micro Viscometer using a sodium chloride/sodium thiosulfate solvent system.

NOTE:   A lower intrinsic viscosity value is representative of a low molecular weight polymer.

C-1256IA

0045562

## EXAMPLE 3

The test procedure of Example 2 was repeated with Polymer B in order to obtain dose response data. The results of this test are set forth in Table III.

## TABLE III

| Sample | Feed Rate (Active Kg /Dry Tonne) | Time In Minutes to Collect | | | | | Filtrate Collected In 20 Minutes (mls) |
|---|---|---|---|---|---|---|---|
| | | 25 mls | 50 mls | 75 mls | 100 mls | 125 mls | |
| No Aid | --- | 0.95 | 3.18 | 6.92 | 11.67 | 18.52 | 133 |
| Polymer B | 0.5 | 0.62 | 2.27 | 4.58 | 8.22 | 12.63 | 139 |
| | 0.75 | 0.60 | 2.13 | 4.30 | 7.42 | 11.95 | 143 |
| | 1.0 | 0.52 | 1.78 | 3.75 | 6.40 | 10.45 | 147 |
| | 1.5 | 0.47 | 1.57 | 3.28 | 5.70 | 9.35 | 151 |
| | 2.0 | 0.58 | 2.05 | 4.03 | 6.85 | 11.39 | 135 |
| | 4.0 | 0.82 | 2.58 | 4.78 | 8.97 | 17.85 | 127 |

C-1256 IA

-12-    C-1256 IA

## EXAMPLE 4

The test procedure of Example 2 was repeated with 250 ml samples of a 20 percent by weight aqueous slurry of titanium dioxide in order to compare the effectiveness of polymers of varying molecular weight.  The results of these tests are set forth in Table IV.

TABLE IV

| Sample | Feed Rate (Active Kg /Dry Tonne) | Time In Minutes to Collect | | | | 80 Percent Cake Time (Minutes) | Filtrate Obtained In 10 Minutes |
|---|---|---|---|---|---|---|---|
| | | 50 mls | 100 mls | 150 mls | 175 mls | | |
| Blank | 0 | 0.67 | 2.23 | 4.68 | 6.30 | 7.38 | 200 |
| Polymer A | 0.5 | 0.60 | 2.13 | 4.50 | 6.00 | 7.27 | 204 |
| | 1.0 | 0.60 | 2.13 | 4.47 | 5.90 | 6.98 | 209 |
| | 1.5 | 0.60 | 2.08 | 4.32 | 5.72 | 6.75 | 210 |
| | 2.0 | 0.53 | 1.90 | 4.07 | 5.50 | 6.52 | 213 |
| | 2.5 | 0.72 | 2.38 | 4.93 | 6.48 | 7.65 | 210 |
| | 3.0 | 0.78 | 2.90 | 6.18 | 8.20 | 9.52 | 195 |
| Blank | 0 | 0.68 | 2.37 | 4.97 | 6.53 | 7.53 | 201 |
| Polymer B | 0.5 | 0.67 | 2.35 | 4.95 | 6.47 | 7.43 | 202 |
| | 1.0 | 0.63 | 2.23 | 4.65 | 6.22 | 7.37 | 204 |
| | 1.5 | 0.55 | 2.02 | 4.30 | 5.80 | 7.15 | 205 |
| | 2.0 | 0.55 | 2.00 | 4.18 | 5.67 | 6.93 | 210 |
| | 2.5 | 0.73 | 2.55 | 5.33 | 7.07 | 8.40 | 205 |
| Blank | 0 | 0.65 | 2.33 | 4.82 | 6.47 | 7.45 | 199 |
| Polymer C | 0.5 | 0.63 | 2.18 | 4.63 | 6.32 | 7.45 | 200 |
| | 1.0 | 0.58 | 2.10 | 4.45 | 6.00 | 7.38 | 202 |
| | 1.5 | 0.58 | 2.03 | 4.23 | 5.70 | 7.23 | 205 |
| | 2.0 | 0.63 | 2.17 | 4.60 | 6.08 | 7.38 | 200 |

## EXAMPLE 5

The test procedure of Example 4 was repeated using an aqueous slurry of calcium carbonate.  The results of these tests are reported in Table V.

TABLE V

| Sample | Feed Rate (Active Kg/Dry Tonne) | Time In Minutes to Collect | | | | 80 Percent Cake Time (Minutes) | Filtrate Obtained In 10 Minutes |
|---|---|---|---|---|---|---|---|
| | | 50 mls | 100 mls | 150 mls | 175 mls | | |
| Blank | 0 | 0.63 | 2.22 | 4.57 | 6.23 | 8.67 | 193 |
| Polymer A | 0.25 | 0.78 | 2.65 | 5.23 | 6.82 | 8.62 | 195 |
| | 0.375 | 0.75 | 2.60 | 5.20 | 6.72 | 8.47 | 196 |
| | 0.5 | 0.67 | 2.28 | 4.72 | 6.12 | 7.77 | 198 |
| | 0.625 | 0.80 | 2.73 | 5.50 | 7.23 | 9.00 | 193 |
| | 0.75 | 0.83 | 2.93 | 5.92 | 7.90 | ---- | 187 |
| | 1.0 | 1.22 | 4.35 | 8.98 | ---- | ---- | 161 |
| | 2.0 | 2.07 | 7.55 | ---- | ---- | ---- | 117 |
| Blank | 0 | 0.68 | 2.37 | 4.82 | 6.47 | 8.78 | 192 |
| Polymer B | 0.125 | 0.82 | 2.75 | 5.70 | 7.60 | ---- | 188 |
| | 0.25 | 0.80 | 2.70 | 5.35 | 6.88 | 8.67 | 194 |
| | 0.375 | 0.80 | 2.60 | 5.30 | 6.82 | 8.57 | 195 |
| | 0.5 | 0.83 | 2.78 | 5.55 | 7.27 | 9.72 | 190 |
| Blank | 0 | 0.67 | 2.33 | 4.65 | 6.37 | 8.72 | 192 |
| Polymer C | 0.125 | 0.87 | 2.82 | 5.72 | 8.03 | ---- | 182 |
| | 0.25 | 0.80 | 2.65 | 5.38 | 7.03 | 9.08 | 192 |
| | 0.375 | 0.78 | 2.57 | 5.32 | 6.95 | 8.80 | 193 |
| | 0.5 | 0.90 | 2.97 | 5.85 | 7.48 | 10.00 | 190 |

## EXAMPLE 6

Attempts were made to prepare 50 percent by weight aqueous slurries of clay. When no polymer or low doses of polymer were used, 50 percent slurries could not be prepared. When doses of 1.0 percent polymer were used, the slurry viscosity was measured on a Brookfield Model RVF Viscometer. The results of these tests are set forth below in Table VI.

### TABLE V I

| Sample No. | [n] | Feed Rate (Percent Dry/Dry) | 50 Percent Clay Slurry Viscosity m.Pa.s |
|---|---|---|---|
| None | ---- | 0 | Could not be prepared |
| 1 | 0.09 | 0.5 | Could not be prepared |
|   |      | 1.0 | 5,310 |
| 2 | 0.12 | 0.5 | Could not be prepared |
|   |      | 1.0 | 2,120 |
| 3 | 0.17 | 0.5 | Could not be prepared |
|   |      | 1.0 | 1,530 |
| 4 | 0.22 | 0.5 | Could not be prepared |
|   |      | 1.0 | 1,050 |
| 5 | 0.29 | 0.5 | Could not be prepared |
|   |      | 1.0 | 710 |
| 6 | 0.62 | 0.5 | Could not be prepared |
|   |      | 1.0 | 380 |
| 7 | 1.60 | 0.5 | Could not be prepared |
|   |      | 1.0 | 1990 |

EXAMPLE 7

Clay slurry viscosity tests were carried out to test slurries which were previously treated with 1.5 Kg per tonne of poly(diallyldimethylammonium chloride) as a filter aid, prior to dewatering. It was found that conventional anionic dispersants could not be used to redisperse these samples. Cationic polymers were required. The results of these tests are set forth in Table VII, appearing below.

TABLE VII

Pretreated Engelhard Slurry

| Feed Rate (Percent Active/ /Dry Tonne) | Polyacrylate 60 Percent Slurry Viscosity | Poly (DADMAC) 50 Percent Slurry Viscosity |
|---|---|---|
| 0.70 | Would not re-disperse up to a feed rate of 6.0 percent polyacrylic acid. Dilution to 50 percent was not successful. | ----- |
| 0.75 | | 4,960 |
| 0.80 | | 4,360 |
| 0.85 | | 3,850 |
| 0.90 | | 3,480 |
| 0.95 | | 3,160 |
| 1.00 | | 2,950 |
| 1.05 | | 2,680 |
| 1.10 | | 2,550 |
| 1.15 | | 2,420 |
| 1.20 | | 2,300 |
| 1.25 | | 2,380 |
| 1.30 | | |
| 1.35 | | |

## EXAMPLE 8

Drainage and retention studies were carried out on clay slurries which were untreated and which had been treated by the cationic dewatering aids and dispersants of the present invention.

In this test, a 50/50 Hardwood Kraft/Softwood Kraft fine paper furnish was used for the study (0.2 percent concentration). Two 3.5-liter stock samples were measured out and agitated via magnetic stirring. To one of the stock samples was added 100 ml of an untreated 1-percent clay slurry. To the other, 100 ml of a 1-percent clay slurry pretreated with 1.5 Kg active/tonne of a homopolymer of diallyldimethylammonium chloride was added. Both stock samples were then agitated for 5 minutes. From each stock sample, three one-liter samples were measured out in preparation for the retention/drainage testing. One liter of each set was used as a blank, while the others were treated with a copolymer of acrylamide and methacryloyloxyethyl trimethyl ammonium sulfate at two dosage levels. The results of these tests are set forth in the following table (Table VIII) and demonstrate the improved drainage and retention characteristics of slurries treated with the cationic agents of the present invention.

TABLE VIII

| Polymer X Feed Rate (Active Kg /Dry Tonne) | Drainage | | Retention | |
|---|---|---|---|---|
| | Untreated Clay (mls Schopper- Riegler Freeness) | Treated Clay (mls Schopper- Riegler Freeness) | Untreated Clay (Percent Transmittance) | Treated Clay (Percent Transmittance) |
| Blank | 190 | 190 | 0 | 0 |
| 0.5 | 310 | 380 | 8.0 | 18.5* |
| 1.0 | 435 | 570 | 31.5 | 59.5 |

Polymer X is a copolymer of acrylamide and methacryloyloxyethyl trimethyl ammonium methosulfate.

-20-.                    C-1256IA

EXAMPLE 9

Retention studies were carried out on slurries of fines which were untreated with the dewatering aids and retention aids of the present invention.

In this test, a cationic homopolymer of diallyldimethylammonium chloride with a molecular weight of about 1,000,000 (Polymer Y) was compared with a cationic copolymer of acrylamide and methacryloyloxyethyltrimethylammonium methosulfate with a molecular weight of about 8,000,000 (Polymer Z). The paper furnish was newsprint from a commercial paper mill. The Britt Jar was operated at 1,500 rpm. The results of this test are set forth in the following table (Table IX) and demonstrate the poor performance of a medium molecular weight polymer as a retention aid when not used in conjunction with the method of the present invention.

TABLE IX

| Sample | Feed Rate Kg. Polymer/ Dry Tonne Fines | Percent Fines Retention |
|---|---|---|
| Blank | ---- | 47.9 |
| Polymer Y | 0.5 | 48.6 |
| Polymer Z | 0.5 | 56.0 |

21

## CLAIMS

1.      A method of improving the dewatering rate of an aqueous slurry of a pigment such as clay, titanium dioxide or calcium carbonate to yield a filter cake which comprises adding to the slurry, prior to the dewatering operation, from 0.05 to 3.0 kg of active polymer per dry tonne of pigment of a water-soluble cationic polymer having a molecular weight in the range 10,000 to 2,500,000.

2.      A method as in Claim 1 which further comprises the step of reforming an aqueous slurry of said pigment by adding water to said filter cake and from 2 to 20 kg of active polymer per dry tonne of pigment.

3.      A method as in Claims 1 or 2 which further comprises the step of improving the retention and drainage during sheet formation by the addition of said polymer-containing pigment to a paper furnish.

4.      A method as claimed in Claim 1, 2 or 3 in which the polymer is a homopolymer of diallyldimethylammonium chloride.

5.      A method as claimed in Claim 1, 2 or 3 in which the polymer is a copolymer of diallyldimethylammonium chloride and acrylamide.

0045562

22

6. A method as claimed in any one of Claims 1 to 5 in which the molecular weight of the polymer is in the range 20,000 to 500,000.